# FASCICULE DE BREVET EUROPEEN

(11) **EP 0 524 089 B1**
(45) Date de publication et mention de la délivrance du brevet: **22.09.1999**
(21) Numéro de dépôt: 92402040.7
(22) Date de dépôt: 15.07.1992
(51) Int. Cl.: G06F 9/44, G06F 9/46

(54) **Structure de logiciel pour système de traitement de données, notamment pour système de télécommunications**
Programmstruktur für ein Datenverarbeitungssystem, insbesondere für ein Telekommunikationssystem
Software structure for a data processing system, especially for a telecommunications system

(30) Priorité: 16.07.1991 FR 9108982
(43) Date de publication de la demande: 20.01.1993
(73) Titulaire: ALCATEL, 75008 Paris (FR)
(72) Inventeur: Collet, Edouard, F-22700 Perros Guirec (FR)
(74) Mandataire: Sciaux, Edmond

(56) Documents cités:
- EP-A- 0 405 829
- TECHNIQUE ET SCIENCE INFORMATIQUES. vol. 6, no. 2, 1987, NEUILY SUR SEINE, FR pages 166 - 169 M. SHAPIRO ET AL. 'SOS: UN SYSTEME D'EXPLOITATION REPARTI FONDE SUR LES OBJETS'
- MICROPROCESSING AND MICROPROGRAMMING. vol. 24, no. 1-5, 1988, AMSTERDAM, NL pages 257 - 265 K.W. PLESSMANN ET AL. 'CONCURRENT OBJECT-ORIENTED PROGRAM DESIGN IN REAL-TIME SYSTEMS'
- ACM/OPERATING SYSTEMS REVIEW. vol. 20, no. 1, Janvier 1986, NEW YORK, US pages 6 - 11 H. LORIN 'AN EXPANDED APPROACH TO OBJECTS'

## Description

La présente invention a pour objet une structure de logiciel pour système de traitement de données, notamment pour système de télécommunications.

Les systèmes de télécommunications et plus généralement les systèmes de traitement de données font appel à la technique des ordinateurs. Les logiciels mis en oeuvre dans ce ordinateurs ont généralement une structure de blocs fonctionnels opérant sur des données qui leur sont extérieures. On citera à cet égard les systèmes SDL du CCITT et ESTELLE de l'ISO. Chaque bloc fonctionnel accomplit une fonction, mais peut avoir recours à un autre bloc pour accomplir une partie de cette fonction, lequel peut avoir à son tour recours à un autre bloc, etc. Les blocs fonctionnels communiquent entre eux par des messages.

Alors que la structure de ces systèmes connus correspond bien aux méthodes de l'analyse fonctionnelle, on peut lui reprocher de conduire à une multiplicité des types de blocs fonctionnels et corrélativement à une grande complexité dans la communication entre blocs.

On connaît par ailleurs des techniques de structuration de logiciel par "objets", chaque objet regroupant des données et des procédures les utilisant. La communication entre objets s'effectue là encore par messages. Le document EP-A-405 829 (ATT/contient une description d'un système de télécommunication, dans lequel des objets communiquent indirectement en utilisant un "run-time" linker. On citera par exemple, l'article "Les approches objets et le langage LRO2 (KEOPS)", de C. ROCHE et al, publié dans "Technique et Science Informatique", vol.8, n°1, 1989. Il y est expliqué, notamment, comment les objets sont aisément créés comme des instances de classes préexistantes, lesquelles sont déjà des objets. Les classes sont elles-mêmes organisées structurellement par des relations qui permettent la création de nouvelles classes à partir des classes existantes. En particulier, deux relations mentionnées sont la relation d'héritage, selon laquelle une instance qui "hérite" reçoit copie des données et des procédures de la classe dans laquelle elle s'inscrit, ainsi que la relation de hiérarchie dont on comprend qu'une classe est la voie d'accès à une autre classe de rang hiérarchique inférieur.

On reconnaît à la structuration par objets des avantages significatifs en ce qui concerne la conception, la mise au point et la maintenance de programmes volumineux.

Toutefois, la structuration classique par objets ne prend pas en compte les interactions multiples que l'on rencontre dans les systèmes de télécommunications

De plus, les inconvénients relatifs à une multiplicité des types de blocs fonctionnels et à une grande complexité dans la communication entre blocs sont également présents dans la structuration par objets telle qu'elle est décrite dans la publication citée.

La présente invention, définie dans les revendications 1 à 6 a donc pour objet une structure de logiciel pour système de traitement de données, notamment pour système de télécommunications qui réponde aux besoins de type "temps réel", tout en mettant à profit les avantages de la structuration par "objets", mais en réduisant sensiblement les inconvénients mentionnés à son sujet.

La structure de logiciel pour système de traitement de données, notamment pour système de télécommunications, à laquelle s'adresse l'invention comprend des objets structurels incluant chacun des données et des procédures, qui sont des programmes utilisant les données de l'objet, tels que l'objet se présente comme un "fournisseur de service", au sens de l'avis X 200 du CCITT et comprenant chacun au moins un point d'accès au service auquel un message destiné à l'objet peut être adressé par un "utilisateur de service", à nouveau au sens de l'avis X 200 du CCITT, un tel message comportant notamment une en-tête et des paramètres, l'en-tête contenant notamment une identité d'objet, chaque objet structurel étant associé à d'autres objets par des relations qui le situent structurellement par rapport à ces autres objets.

La structure de logiciel de l'invention atteint les objectifs énoncés, en ce que chaque objet est composé d'un ou plusieurs modules de point d'accès au service et d'un ou plusieurs modules internes ou modules de noyau et en ce que les communications entre objets ont lieu par transmission de messages entre un module de point d'accès au service d'un objet initiateur et un module de point d'accès au service d'un objet destinataire, la transmission de ces messages étant accomplie par l'entremise d'un objet constituant un service de communication, recevant les messages à acheminer des objets initiateurs et les fournissant aux objets destinataires, ce service de communication contenant des données définissant les relations entre objets et s'y référant en même temps qu'à l'identité d'objet de l'en-tête d'un message, dans la détermination de l'identité de l'objet structurel destinataire.

L'introduction, selon l'invention, d'objets de structure modulaire permet, en accroissant la complexité des objets, d'en réduire le nombre, sans toutefois en rendre la conception plus coûteuse. La communication par messages, essentiellement asynchrone, et qui demande par conséquent des précautions coûteuses pour préserver l'aspect "temps réel" du traitement, peut ainsi être limitée aux communications entre objets relativement moins nombreux. Par ailleurs, la structuration du logiciel par des relations situant les objets les uns par rapport aux autres, relations qui sont prises en compte par ledit service de communication, permet que les messages soient acheminés sans que les objets aient à connaître la structure dans laquelle ils s'insèrent, tout en autorisant une structuration très élaborée qui concourt elle aussi à la réduction du nombre d'objets, donc à la résolution plus aisée des problèmes de temps réel.

La structure de logiciel de l'invention est en outre caractérisée en ce que ledit protocole de communication est défini dans le module de point s'accès au service de l'objet destinataire et il est spécifié par ce dernier au module de point d'accès au service de l'objet initiateur, afin que celui-ci l'applique.

Cette disposition permet que l'objet initiateur ne connaisse pas non plus la nature de l'objet structurel destinataire, ce qui facilite la conception de ces objets.

En outre, selon l'invention, ladite en-tête des messages contient l'identité d'une opération demandée à l'objet destinataire du message et ledit service de communication tient compte de ladite identité d'opération demandée, dans la sélection du point d'accès au service d'un objet structurel destinataire auquel doit être adressé un message.

L'invention prévoit de plus que lesdites relations comprennent notamment la dépendance, l'utilisation, l'inclusion et l'homologie.

Les différents objets et caractéristiques de l'invention seront maintenant exposés de façon plus détaillée dans la description qui va suivre d'un mode de mise en oeuvre de la présente invention, faite en se référant aux figures annexées qui représentent :
- la figure 1, un objet à un ou plusieurs points d'accès au service individuels inclus dans la structure de logiciel de l'invention,
- la figure 2, un mode de réalisation de l'objet de la figure 1, sous la forme d'un automate à états finis,
- la figure 3, la structure générale d'un objet CACO conçu conformément à la présente invention,
- la figure 4, la structure générale d'un objet CSIG inclus dans l'objet CACO de la figure 2,
- la figure 5, la structure générale d'un objet CTPP inclus dans l'objet CACO de la figure 2,
- la figure 6, la structure générale d'un objet CSPP inclus dans l'objet CACO de la figure 2,
- la figure 7, un exemple de réalisation des moyens de routage de message conformes à l'invention.
- la figure 8, une variante de réalisation des moyens de routage de message de la figure 7.

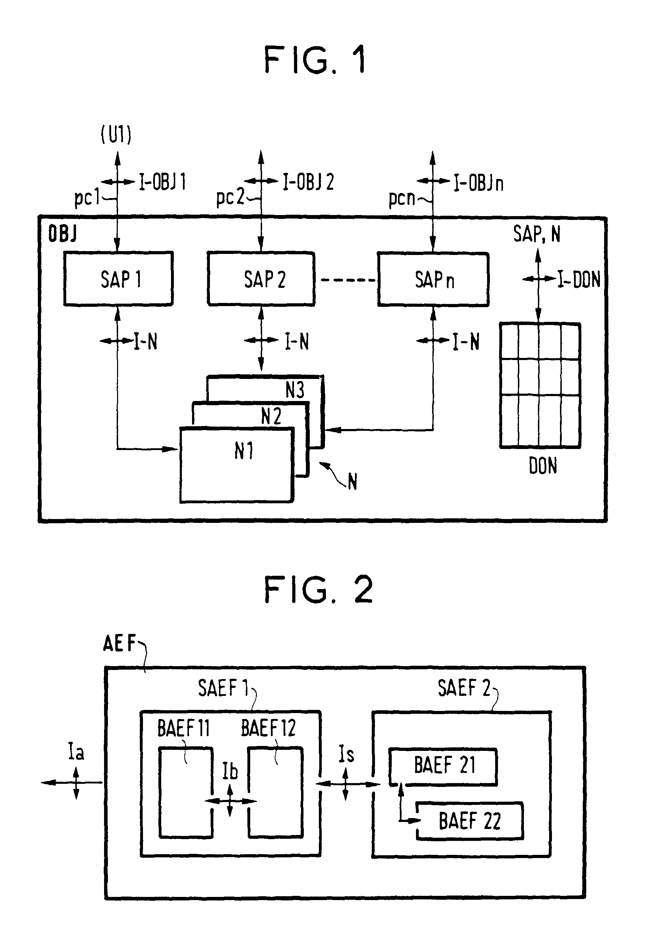

La figure 1 représente, sous la forme d'un diagramme de principe, un objet structurel OBJ conforme à la définition fournie dans le préambule de la présente demande et qui comprend donc des données et des procédures. L'organisation de ces procédures est quelconque. Elles peuvent constituer un algorithme, un système de manipulation de données, un automate à états finis, etc. Un objet structurel se définit par ses attributs, c'est-à-dire par les éléments structurels le composant, et par les fonctions qu'il remplit, grâce à la mise en oeuvre des programmes de traitement qu'il contient ; on verra en outre, par la suite, qu'il se caractérise également par des relations qui l'unissent à des objets structurels ou seulement fonctionnels. Une structure basée sur de tels objets présentent des avantages en ce qui concerne la validation et la réutilisation du logiciel des objets.

Un objet structurel comprend un ou plusieurs ports de communication qui constituent des "points d'accès au service", au sens de l'avis X 200 du CCITT déjà mentionné. Chacun d'eux est doté d'un module de point d'accès au service. Dans l'exemple proposé, l'objet OBJ comprend trois points d'accès au service, pc1, pc2, pcn, respectivement dotés des modules de point d'accès au service SAP1, SAP2, SAPn. Les points d'accès au service de l'objet OBJ sont respectivement accessibles par des interface d'accès I-OBJ1, I-OBJ2, I-OBJn. L'interface définit les échanges entre un autre objet, vu comme utilisateur de l'objet OBJ, et un point d'accès au service correspondant de l'objet OBJ vu comme prestataire de service. La mise en oeuvre de l'objet OBJ à partir d'un autre objet (U1, par exemple) s'obtient ainsi par la transmission d'un message de l'objet U1 à l'un des modules de point d'accès au service, SAP1 par exemple, de l'objet OBJ, conformément à un protocole de communication matérialisé par l'interface correspondante I-OBJ1. On peut définir généralement un protocole de communication, au niveau de l'interface, comme l'ensemble des règles de constitution et des processus d'interprétation des messages, en y incluant l'accomplissement des actions de communication qui sont demandées par le contenu de tels messages.

Conformément à l'un des aspects de l'invention, le protocole de communication appartient au point d'accès au service de l'objet prestataire de service destinataire d'un message et toute communication débute par un échange qui identifie le protocole qu'il convient d'appliquer, à partir d'une information fournie par le module de point d'accès au service de l'objet destinataire et transmise à l'objet utilisateur, initiateur de la transmission du message. L'objet OBJ n'a donc pas besoin de connaître l'utilisateur U1 afin de déterminer le protocole de communication à appliquer. Et l'utilisateur n'a pas besoin de connaître par avance le protocole de communication à appliquer.

Les messages fournis aux points d'accès au service pc1, pc2, pcn sont traités par des modules de point d'accès au service SAP1, SAP2, SAPn qui se chargent, chacun pour son compte de prendre en charge un message entrant, de l'analyser et d'accomplir toute action qui doit en découler, celle-ci consistant souvent à alerter le noyau N pour obtenir l'accomplissement de procédures demandées. Chacun de ces modules de point d'accès au service, appelé SAP pour simplifier, connaît donc un protocole de communication et l'applique, côté interface d'accès.

Les différents SAP communiquent avec le noyau N de l'objet OBJ, par des messages transmis par des accès individuels répondant, de préférence, à une même interface interne I-N. Cela signifie que la communication entre les différents SAP et le noyau N obéit à des règles communes de communication et que les SAP réalisent, en tant que de besoin, l'adaptation entre les divers protocoles d'accès et le noyau. Cela simplifie ce dernier.

Le noyau N applique des procédures constituant collectivement la ou les fonctions dévolues à l'objet OBJ. De préférence, le noyau N est lui-même de structure modulaire ; il comprend par exemple des modules N1, N2, N3, chacun d'entre eux autonome par rapport aux autres et accomplissant un sous-ensemble des procédures de l'objet OBJ. Le traitement réalisé dans un SAP, à la réception d'un message venant d'un utilisateur, comprend une analyse aboutissant éventuellement à la détermination qu'un module de noyau particulier doit être activé. Cette analyse est différente selon le SAP dont il s'agit, de sorte que la fonction accomplie par l'objet OBJ dépendra du SAP par lequel on l'aura activé.

Pour donner un exemple simple, SAP1 peut servir à l'exécution de la fonction normale de l'objet OBJ, SAP2 à l'exécution d'opérations de maintenance, et SAPn à l'observation du trafic. Il est évident que les procédures accomplies diffèreront selon que l'objet OBJ est sollicité par l'un ou l'autre de ces SAP.

Par ailleurs, bien que cela ne soit pas illustré à la figure 1, la structure modulaire du noyau N inclura le cas où l'exécution d'une fonction demande l'intervention de plusieurs modules de noyau, chaque module de noyau activé pouvant solliciter un autre module de noyau. La communication entre modules de noyau se fera par une interface I-N tout comme la communication de SAP à module de noyau et elle permettra à différents modules de noyau d'intervenir successivement.

L'objet OBJ comprend en outre un module de données DON. Les données qui y sont consignées comprennent classiquement, des données de travail temporaires, certaines reçues d'autres objets, qui seront abandonnées à la fin de l'accomplissement d'une fonction, des données internes semi-permanentes, descriptives de l'objet, inscrites par des moyens qui sortent du domaine de la présente invention et qui ne sont pas modifiées en cours de traitement, ainsi que des ensembles de données de fonctionnement, correspondant chacun à l'un de différents traitements d'appels ou, plus généralement, à chaque transaction, en cours d'accomplissement par l'objet OBJ, dénommés "contextes", un contexte étant propre à chacune de ces transactions et étant conservé tout le temps du traitement de la transaction. Le module de données DON est accessible par les SAP et par le noyau, au travers d'une interface I-DON, la même pour tous les utilisateurs du module de données DON. Cela permettra d'y inscrire des données importées d'autres objets, de modifier les informations semi-permanentes, à l'initiative des SAP, ou de mettre à jour les contextes, à l'initiative du noyau.

On ne décrira pas plus avant les dispositions qui, dans le module N1 du noyau N permettent à celui-ci de mettre en oeuvre une fonction demandée, conformément au message interne qui lui est ainsi transmis. Il suffit de mentionner qu'à cet égard, le module N1 s'associera par exemple un contexte du module de données DON, désigné par une indication contenue dans le message, et traitera un évènement également indiqué dans le message, par exemple à la manière d'un automate à états finis.

Le format des messages reçus ou transmis vers d'autres objets par les SAP, conformément à l'invention, est le suivant :
<message> = <en-tête> <paramètres> , dans lequel
<en-tête> = <objet> <SAP> <opération> <type de requête>.

Le champ <objet> désigne un objet et l'on peut en déduire les caractéristiques de cet objet. Lorsque le message est composé par l'objet transmetteur, le champ <objet> peut désigner un objet que l'on dira "fonctionnel" auquel ne correspond aucun objet structurel. Le même message, lorsqu'il sera remis à un objet destinataire, contiendra, dans le champ <objet>, l'identité de l'objet structurel destinataire. On reviendra plus loin sur ces différents aspects. Le champ <objet> peut s'exprimer sous la forme d'une désignation mnémonique, à plusieurs lettres alphabétiques, laquelle, sous forme codée, comprendra par exemple 12 bits.

Le champ <SAP> désigne le SAP parmi ceux que comporte l'objet. Il peut s'exprimer sous la forme d'une désignation mnémonique codée sur 4 bits.

Le champ <opération> désigne l'une des opérations prévues dans le système. Selon un des aspects de l'invention, les opérations demandées aux différents objets sont définies collectivement comme un ensemble d'opérations et chaque objet accomplit un sous-ensemble d'opérations inclus dans cet ensemble. Le nombre global de ces opérations est très limité. Elles peuvent s'exprimer sous la forme de trois lettres alphabétiques et être codées sur 8 bits.

Le champ <type de requête> désigne le type de transaction engagée, ou, plus particulièrement, la phase dans un échange relatif à l'opération désignée, comprenant plusieurs phases possibles. Il n'existe que quelques transactions distinctes. Elles seront individuellement identifiées par deux lettres alphabétiques et seront codées sur 4 bits.

Cet exemple montre que l'en-tête des messages peut se limiter à quatre octets.

On notera, par ailleurs, que le couple <opération> <type de requête> identife une phase d'exécution, dans le cadre de la fonction générale dévolue au couple <objet><SAP>.

Les <paramètres>, quant à eux, peuvent être beaucoup plus encombrants ; cela dépendra de l'opération demandée et du type de requête, ce qui détermine notamment les données qui doivent être transmises à l'objet en vue du traitement à accomplir. La structure des <paramètres> est définie par l'en-tête du message et, en particulier, par la valeur des éléments <SAP>, <opération> et <type de requête>.

Le rôle d'un SAP dans la réception d'un tel message sera, par exemple, de vérifier les champs <objet> et <SAP> qui doivent concorder avec l'identité de l'objet et du SAP, ainsi qu'avec la nature de l'opération demandée par le champ <opération>, de décoder les champs <opération> et <type de requête> pour identifier le module de noyau, N1 par exemple, qui doit répondre à la réception du message dont il s'agit, ce décodage étant propre à chaque SAP, c'est-à-dire tenant compte de sa propre identité, et de préparer un message interne qui lui sera transmis par l'interface interne I-N correspondante, ainsi que d'adresser les <paramètres> au module de données DON, à qui ils seront transmis par l'interface interne I-DON, afin qu'ils soient enregistrés dans une zone de mémoire prédéfinie du module DON, à la disposition des modules du noyau N. Ensuite, le module de noyau N1, seul ou en coopération avec d'autres modules de noyau, pourra accomplir sa fonction.

Alors que le diagramme de principe de la figure 1 fournit d'un objet une représentation essentiellement structurelle, on va maintenant, en se tournant vers la figure 2, en donner un exemple de réalisation essentiellement organique.

La figure 2 représente un automate à états finis AEF contenant deux sous-automates à états finis SAEF1 et SAEF2. Le premier de ces sous-automates, SAEF1, comprend deux "briques d'automate" BAEF11 et BAEF12, tandis que le deuxième sous-automate comprend des briques BAEF21 et BAEF22.

L'accès à l'automate AEF s'effectue par une interface Ia. Une telle interface opèrera de préférence sur le mode FIFO (premier entré - premier sorti) ; elle est donc essentiellement asynchrone. Les échanges entres les sous-automates SAEF1 et SAEF2 s'effectuent par une interface Is. Bien que cela n'apparaisse pas sur la figure, les échanges entre l'automate AEF et les sous-automates s'effectuent par la même interface Is. Une telle interface opèrera de préférence selon le mode "file interne", dans lequel le fonctionnement du sous-automate n'est pas interruptible par une demande externe à l'automate. On dira qu'une telle interface est synchrone. Les échanges entres les briques d'automate BAEF11 et BAEF12 s'effectuent par une interface Ib. Bien que cela n'apparaisse pas sur la figure, les échanges entre le sous-automate SAEF1 et les sous-automates qu'il contient s'effectuent par la même interface Is. Il en va de de même en ce qui concerne le sous-automate SAEF2 et les briques d'automate qu'il contient. L'interface Ib peut être de type "rendez-vous", c'est-à-dire que le fonctionnement des briques d'automate entre eux et en relation avec le sous-automate les contenant est lié et que la dissociation d'un sous-automate en briques d'automate existant au stade de la conception n'existe plus à l'exécution.

Les automates dont il s'agit, au niveau brique d'automate, sous-automate ou automate sont des structures dérivées des réseaux de Pétri, bien connus dans la technique.

En pratique, l'objet OBJ de la figure 1 peut ainsi être du type de l'automate AEF de la figure 2. Chaque SAP de l'objet OBJ prendra la forme d'un sous-automate SAEF1, SAEF2..., pouvant être composé de plusieurs briques d'automate, à raison d'une brique d'automate par opération. L'enchaînement du fonctionnement de ces briques sera obtenu par la création d'évènements internes, chacun d'eux causant la réponse appropriée de la brique d'automate destinataire, après quoi celle-ci retourne le contrôle au sous-automate, de sorte que la synchronisation entre les briques d'automate ne pose aucun problème. Chaque module du noyau prendra également la forme d'un sous-automate, mais ne comprenant qu'une seule brique, car chacun d'eux ne déroule qu'un seul processus.

Ainsi, seule la communication entre objets s'effectue par messages, les données à transférer d'un objet à l'autre étant contenues dans la partie <paramètres> des messages. Par contre, à l'intérieur d'un objet (AEF, selon la figure 2), la communication s'effectuera essentiellement par variables communes, inscrites dans les données DON de l'objet et accessibles aux différents éléments qui compose l'objet.

De même, seule la communication entre objets est asynchrone, puisque les messages entre objets seuls sont mis en FIFO, de sorte que les problèmes de temps réel, qui demandent des temporisations pour surveiller le dépassement éventuel du temps imparti aux opérations, sont cantonnées à ce niveau, permettant ainsi le développement de la logique interne des objets sans qu'y interfèrent les préoccupations relatives au temps réel.

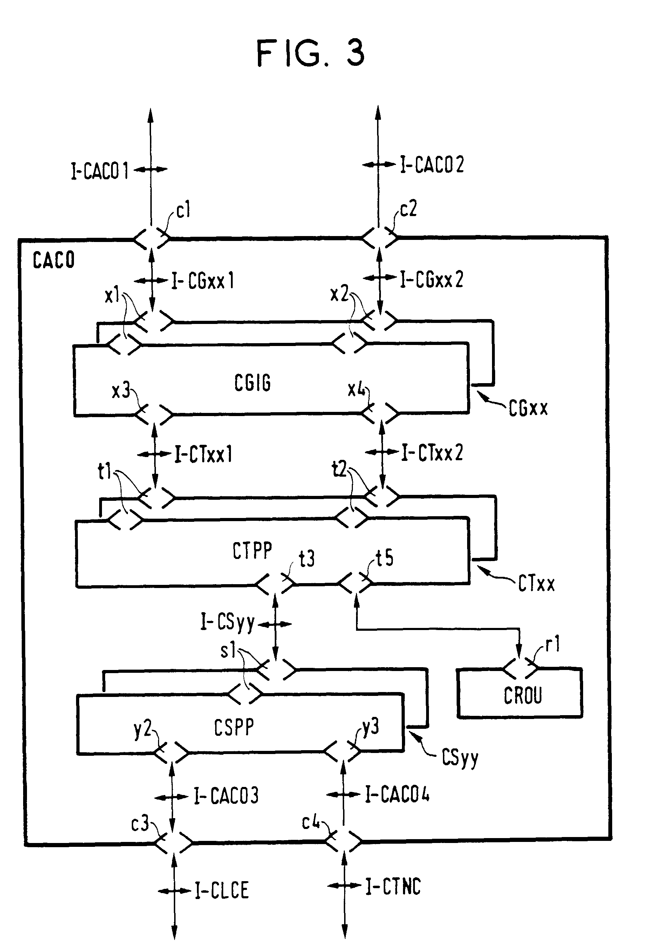

On va maintenant décrire, en se reportant aux figures 3 à 6, une application de la structure de logiciel de la présente invention.

Dans la description qui suit, on omettra pour le moment les aspects "multi-traitement" permettant à une telle structure de traiter de multiples appels en simultanéité apparente, et on ne décrira que ce qui se rapporte à un seul appel. De même, on ne dira rien des aspects "multiprocesseurs" et l'on pourra supposer, pour le moment, que l'ensemble de la structure d'application réside dans un seul processeur.

La figure 3 représente l'ensemble de la structure d'application qui comprend deux interfaces supérieures I-CACO1 et I-CACO2, un objet global CACO et deux interfaces inférieures I-CLCE et I-CTNC. L'objet global CACO est en charge de la fonction de commande d'appel dans un système de commutation. L'appel, d'une façon générale, correspond à une demande de communication ou demande similaire émanant d'un usager du système de commutation et la commande d'appel consiste à mettre en oeuvre des moyens de commutation et autres de manière à répondre à la demande de communication. L'interface supérieure I-CACO1 est l'interface avec la fonction de communication côté ligne appelante. L'interface supérieure I-CACO2 est l'interface avec la fonction de communication côté ligne appelée. Côté inférieur, l'interface I-CTNC donne accès à la fonction de recherche d'itinéraire, en vue de la détermination d'un itinéraire permettant de connecter la ligne appelante à la ligne appelée. L'interface I-CLCE donne accès à l'équipement de connexion local, en charge d'établir la connexion physique entre la ligne appelante et la ligne appelée, selon l'itinéraire déterminé.

L'objet CACO possède des SAP, conformément à ce qui vient d'être décrit en relation avec la figure 1. Les SAP seront désormais plus simplement représentés par une sorte de petit losange portant la référence du SAP. L'objet CACO reçoit ainsi un message de l'interface I-CACO1 par le SAP c1. Il le retransmet au SAP x1 de l'un de plusieurs objets inclus CGxx, au travers de l'interface I-CGxx1. On retrouve la même disposition en ce qui concerne les interfaces I-CACO2, I-CLCE, I-CTNC, les SAP c2, c3, c4 de l'objet CACO et les SAP internes x2, y2 et y3, ces deux derniers en rapport avec un autre de plusieurs objets inclus CSyy, au travers des interfaces I-CACO3 et I-CACO4.

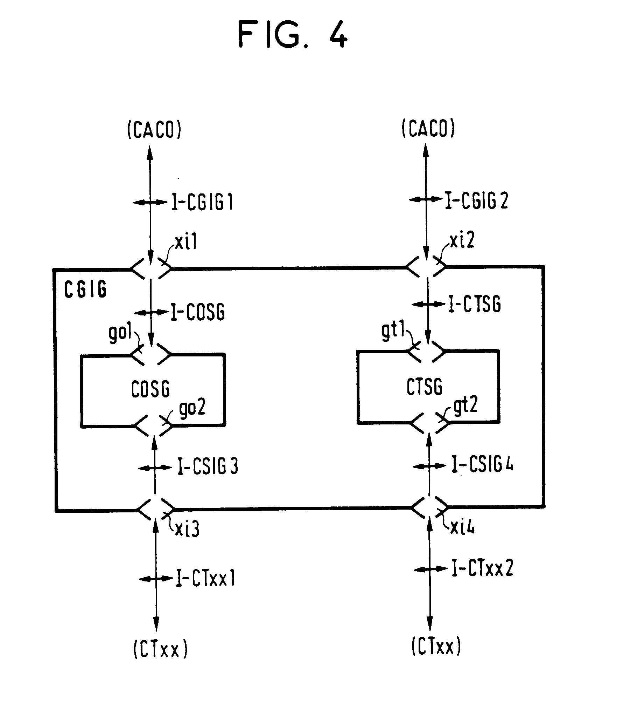

L'objet CACO contient donc, côté supérieur, sur la figure, une série d'objets semblables, comme l'évoque le dessin d'un deuxième objet tracé en perspective par rapport au premier, portant la référence collective CGxx et auxquels l'objet CACO accède au travers d'interfaces respectives I-CGxx1 et I-CGxx2 et de SAP respectifs x1 et x2. Ces objets traitent chacun un protocole de communication avec les abonnés. La figure 4 en illustre un de manière plus détaillée, dénommé CGIG, qui est donc une forme de l'objet CGxx, doté de SAP xi1 et xi2 accessibles de l'objet CACO au travers d'interfaces respectives I-CGIG1 et I-CGIG2. Comme on peut le voir, cet objet CGIG est composé de deux objets internes, un objet de communication côté abonné appelant COSG et un objet de communication côté abonné appelé CTSG. Ces objets internes ont chacun un SAP, respectivement go1 et gt1, couplé à un correspondant des SAP xi1 et xi2 de l'objet CGIG, par lequel ils reçoivent les messages de communication côté abonnés, au travers d'interfaces respectives I-COSG et I-CTSG assurant la communication avec l'objet CSIG, ainsi qu'un deuxième SAP, respectivement go2 et gt2, couplé à un correspondant des SAP xi3 et xi4 de l'objet CGIG, côté inférieur, pour l'accès à d'autres objets, également inclus dans l'objet principal CACO.

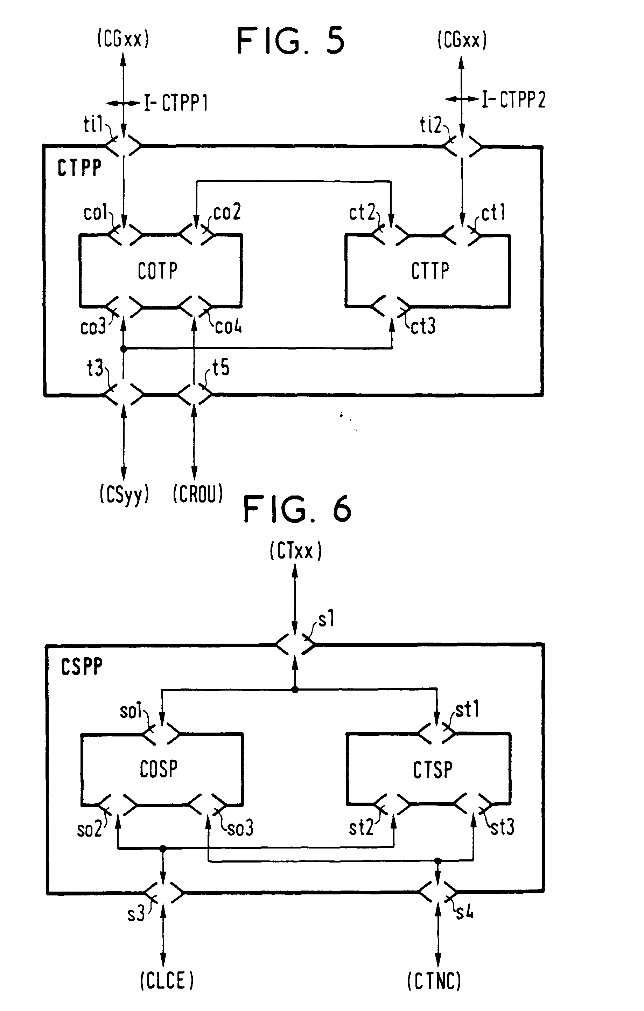

L'objet CACO contient également une série d'objets prestataires de service de télécommunication, collectivement dénommés CTxx, selon la même représentation que pour l'objet CGxx, et auxquels les objets CGxx accèdent au travers d'interfaces respectives I-CTxx1 et I-CTxx2 et de SAP respectifs t1 et t2. Ces objets traitent chacun les fonctions relatives à la fourniture d'un service de télécommunication particulier. L'un d'entre eux, dénommé CTPP, identifié à la figure 3, est représenté à la figure 5. Il fournit le service de télécommunication point à point. Cet objet est doté de SAP ti1 et ti2 accessibles des objets CGxx au travers d'interfaces respectives I-CTPP1 et I-CTPP2. Comme on peut le voir, l'objet CTPP est composé de deux objets internes, un objet de communication côté abonné appelant COTP et un objet de communication côté abonné appelé CTTP. Ces objets internes ont chacun un SAP, respectivement co1 et ct1, couplé à un correspondant des SAP ti1 et ti2 de l'objet CTPP, par lesquels l'objet reçoit les messages de communication côté abonnés en provenance des objets CGxx, ainsi qu'un deuxième SAP, respectivement co3 et ct3, couplé l'un et l'autre au SAP t3 de l'objet CTPP, côté inférieur, pour l'accès à d'autres objets collectivement indiqués par la référence CSyy. De plus, un SAP co2 de l'objet COTP est directement relié à un SAP ct2 de l'objet CTTP, ce qui permet l'échange direct de messages entre les deux objets inclus. Enfin, l'objet COTP possède un SAP additionnel co4 couplé, par le SAP t5 de l'objet CTPP, à un objet additionnel CROU représenté à la figure 3, utilisé pour définir un trajet de connexion de l'abonné demandeur à un dispositif de communication qui procèdera aux échanges de signaux avec l'abonné demandeur (essentiellement réception du numéro demandé). Pour simplifier, on n'a pas représenté les interfaces associées aux différents SAP du dispositif de la figure 4.

L'objet CACO contient encore une série d'objets dits composantes de service, collectivement dénommés CSyy, selon la même représentation que pour l'objet CGxx et auquel les objets CTxx accèdent au travers d'un interface I-CSyy et d'un SAP s1. Ces objets traitent chacun les fonctions relatives à une composante du service concerné, telle que communication vocale, communication vidéo, etc. L'un d'entre eux, dénommé CSPP, identifié à la figure 3, est représenté à la figure 6. Il fournit une composante de service telle que la communication vocale et est lui-même constitué de deux objets internes, un objet de communication côté abonné appelant COSP et un objet de communication côté abonné appelé CTSP. Ces objets internes ont chacun un SAP, respectivement so1 et st1, couplé au SAP s1, par lequel ils reçoivent les messages de communication côté abonnés, au travers d'une interface commune non représentée, assurant la communication avec un objet CTxx, ainsi qu'un deuxième SAP, respectivement so2 et st2, couplés ensemble au SAP s3 de l'objet CSPP, côté inférieur, et un troisième SAP, respectivement so3 et st3, couplés ensemble au SAP s4 de l'objet CSPP, pour l'accès à d'autres objets, par les interface I-CLCE et I-CTNC, comme indiqué plus haut.

L'objet CACO contient enfin au moins l'objet additionnel CROU déjà cité, auquel les objets CTxx accèdent respectivement par leur SAP t5. Cet objet CROU n'ayant qu'un seul SAP, r1, doit être vu comme un auxiliaire des objets CTxx auquel ceux-ci ont recours pour l'accomplissement d'une fonction qui leur est commune, dans un mode question-réponse, le SAP unique recevant une question d'un objet et transmettant à cet objet la réponse de l'objet CROU.

Ce qui précède constitue un exemple de réalisation de la structure de logiciel de l'invention, dans un cas d'application particulier. Pour en illustrer l'utilisation, on va donner brièvement ci-dessous un exemple des messages échangés et des fonctions accomplies dans cette structure, lors de l'établissement d'une communication vocale entre deux abonnés, en se reportant aux figures 3 à 6.

Une demande de communication émanant d'un abonné demandeur parvient à l'objet CACO sous la forme d'un message fournit par l'interface I-CACO1 au SAP c1. Il s'agit d'un message de demande d'établissement de communication, émanant d'un abonné demandeur, aussi est-il immédiatement retransmis à l'objet CGIG et, dans celui-ci, à l'objet COSG.

En réponse, l'objet COSG, émet sur son SAP go2 un message nommé CTPP.t1 - EST.RQ d'après le contenu de son entête qui est conforme à ce qui a été indiqué précédemment. Ce message est donc adressé au SAP ti1 de l'objet CTPP. Un établissement de communication (EST) est demandé (RQ). Les paramètres accompagnant identifient l'abonné dont il s'agit et ses caractéristiques, notamment le fait qu'il communique par signaux vocaux.

En raison du fait que ce message est adressé au SAP ti1, le message est retransmis à l'objet inclus COTP, sur son SAP co1. Ce dernier, à son tour, émet un message, fournit sur son SAP co4, vers le SAP t5 de l'objet CTPP, à destination de l'objet CROU mentionné plus haut, message nommé CROU - DET.RQ. Ce message est donc adressé à l'objet CROU, qui ne possède qu'un SAP. Un trajet de connexion (DET) est donc demandé (RQ), défini par les paramètres ci-dessus mentionnés.

L'objet CROU répond par un message en retour, nommé CROU - DET.CF qui reprend les éléments essentiels de l'entête du message de demande (CROU - DET), ce qui permet son acheminement en amont vers l'objet utilisateur, avec un nouveau type de requête (CF, indiquant une réponse à une demande), et fournit le trajet demandé, dans les paramètres de ce message.

L'objet COTP émet alors un nouveau message nommé CSPP.s1 - OREST.RQ sur son SAP co3. Ce message est donc destiné au SAP s1 de l'objet CSPP et demande (RQ) une connexion côté abonné demandeur (OREST), en fournissant le trajet déjà obtenu. A l'établissement de cette connexion, l'objet CSPP répondra par un message en retour nommé CSPP - OREST.CF.

On arrêtera ici la description de ce processus, qui pourrait par ailleurs être plus détaillée, faisant intervenir d'autres objets, car elle est déjà suffisante pour faire apparaître que la structure du logiciel d'application décrit, outre le fait que celui-ci est composé d'objets ayant chacun une fonction utilisée dans le cadre du processus de traitement d'appel, comprend des canaux de communication prévus entre les objets, c'est-à-dire des moyens pour acheminer des messages entre objets, selon leur en-tête, conformément à la place qu'occupe chaque objet dans la structure d'application.

On pourrait en effet imaginer que, dans chaque cas d'application du logiciel, on prévoit que chaque objet connaisse la structure d'application entière, ou tout au moins les objets auxquels il peut avoir à transmettre des messages. L'objet émetteur remettrait directement le message à l'objet destinataire. Des variantes plus ou moins élaborées de cette conception sont faciles à imaginer. Elles souffrent toutes de l'exigence que l'on vient de mentionner : avant de concevoir un quelconque objet, il faut déjà connaître les identités des objets avec lequel ce premier objet communiquera. On conçoit bien que, si l'identification des fonctions auxquelles un objet donné devra faire appel est nécessaire, il est par contre souhaitable de pouvoir différer l'identification des objets accomplissant ces fonctions. On va voir que cela passe par l'utilisation de relations entre objet, comme moyen de routage des messages vers les objets accomplissant les fonctions que demandent les messages.

La structuration de logiciel par objets, comme indiqué au début de ce texte, prévoit déjà l'existence de relations structurantes. Selon l'invention, les relations pouvant exister entre les objets de la structure de logiciel sont :
- la relation d'utilisation qui spécifie qu'un objet est utilisé par un autre,
- la relation de dépendance ou de hiérarchie qui spécifie qu'un objet est une forme particulière d'un objet modèle (hiérarchiquement supérieur),
- la relation d'inclusion qui spécifie qu'un objet est inclus dans un autre,
- la relation d'homologie, qui spécifie qu'un objet est homologue d'un autre, permettant de diviser un objet en deux parties homologues séparément identifiées.

On retrouve aisément ces relations dans la structure décrite en se référant aux figures 3 à 6. L'objet CROU est utilisé par l'objet CTxx. L'objet CTPP dépend de l'objet CTxx. Les objets COTP et CTTP sont inclus dans l'objet CTPP. Ils sont par ailleurs homologues l'un de l'autre.

Selon l'invention, il est prévu d'acheminer les messages ayant un en-tête conforme à ce qui a été décrit plus haut, par des moyens de routage de messages constituant un service de communication, lequel tient compte de telles relations, dans chaque application, de telles sorte que l'objet émettant un message n'a pas besoin de connaître l'identité de l'objet qui accomplira l'opération demandée par ce message, ce qui revient à lui permettre de nommer la fonction d'un objet hypothétique auquel l'opération est demandée, à charge pour le service de communication d'identifier l'objet structurel destinataire auquel ce message doit être finalement remis.

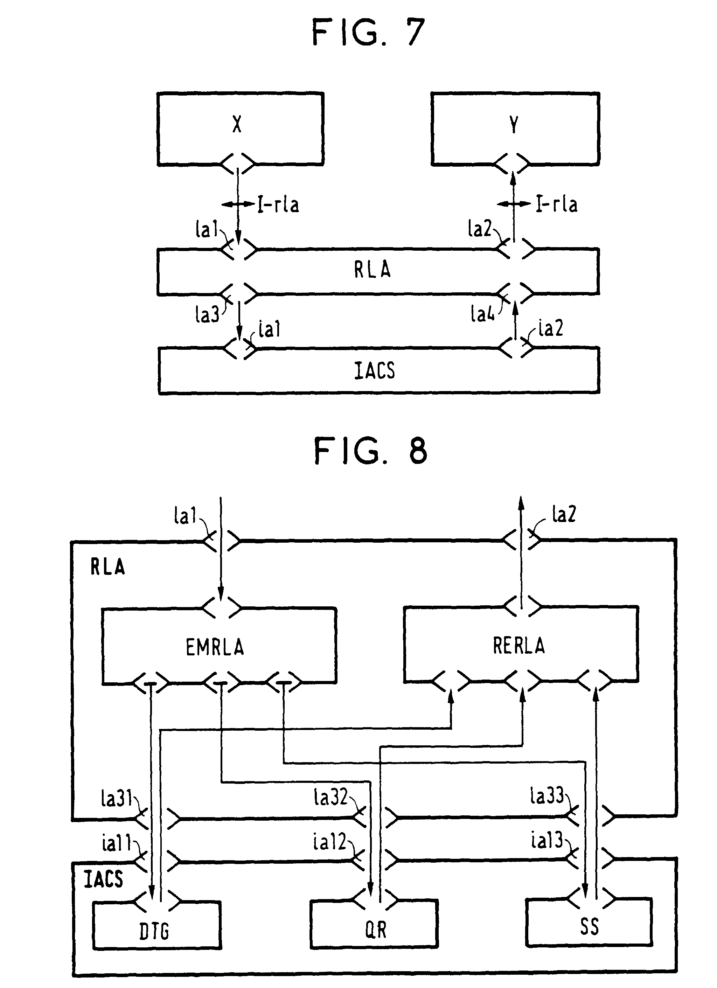

Selon l'invention également, ce service de communication constitue un objet. Et cet objet a recours à un autre objet pour le transfert effectif du message à son destinataire, une fois celui-ci identifié. De tels objets vont maintenant être décrits en se reportant à la figure 7 qui représente un exemple de réalisation du service de communication de message conforme à l'invention.

Dans l'exemple de la figure 7, des objets X, Y (ou plutôt des SAP X, Y d'objets respectifs non représentés, mais cela revient au même), communiquent entre eux par le moyen d'objets de transfert de messages RLA et IACS. Le message à transmettre, provenant par exemple de l'objet X qui sera l'objet initiateur, sera inclus dans le champ <paramètres> d'un message de communication adressé par l'objet X au SAP la1 de l'objet RLA. En réponse, l'objet RLA établira une liaison entre l'objet initiateur et l'objet Y auquel doit être remis le message à transmettre, c'est-à-dire à un objet structurel destinataire effectif du message et délivrera le message à transmettre à cet objet destinataire, par son SAP la2. Dans l'établissement de cette liaison, l'objet RLA prendra en compte la structure du logiciel, c'est-à-dire les relations entre objets, pour déterminer, à partir de l'entête du message, et notamment des champs <objet> et <SAP> et en application des relations s'appliquant à l'objet nommé dans le champ <objet>, l'identité de l'objet structurel destinataire. L'objet RLA traduira en conséquence l'en-tête du message et confiera à l'objet IACS le soin d'acheminer physiquement le message jusqu'à l'objet destinataire.

Les relations elle-même sont incrites dans le module de données de l'objet RLA sous la forme d'énonciations de type :
- <OBJETi> <SAPm> <D> <OBJETj> <SAPn>, ce qui signifie que l'objet désigné par <OBJETi> dépend, relation indiquée par <D>, de l'objet désigné par <OBJETj> et plus précisément que l'en-tête d'un message contenant <OBJETi> <SAPm>, doit être traduite en une en-tête contenant <OBJETj> <SAPn>, après quoi il n'y a plus qu'à acheminer le message conformément à cette nouvelle en-tête, ce qui sera demandé à IACS, ou
- <OBJETi> <SAPm> <U> <OBJETj> <SAPn>, ou
- <OBJETi> <SAPm> <I> <OBJETj> <SAPn>, ou
- <OBJETi> <SAPm> <H> <OBJETj> <SAPn>,
expressions dans lesquelles <U>, <I>, <H> représentent les relations d'utilisation, d'inclusion et d'homologie.

La mention de l'identité d'un SAP, dans les relations ci-dessus est optionnelle.

L'objet RLA, dans la version de la figure 7, à la réception d'un message qui lui parvient d'un objet quelconque, sur son SAP la1, consulte donc les relations enregistrées dans son module de données et modifie l'en-tête du message en conséquence de ces relations. Ensuite, par son SAP la3, il le remet au SAP ia1 de l'objet IACS. Celui achemine le message par des voies de transmission et, au point d'arrivée, par son SAP ia2, il le remet au SAP la4 de l'objet RLA qui, par son SAP la2, le fournit à l'objet destinataire dont l'identité est indiquée dans l'en-tête du message.

En particulier, les organes transmetteurs et destinataires du message peuvent être implantés dans des dispositifs de traitement de données physiquement séparés. L'objet RLA existe dans chacun de ces dispositifs, avec un module de données complet, pour pouvoir remplir sa fonction au profit des objets implantés dans le dispositif. De même, l'objet IACS existe dans chacun des dispositifs et ses différentes parties sont interconnectées de manière à permettre l'acheminement de messages entre elles, selon leur en-tête.

On va maintenant se tourner vers la figure 8 qui représente une version plus élaborée des objets RLA et IACS de la figure 7 dans laquelle, d'une part, l'objet RLA comprend deux objets inclus, l'objet émission EMRLA chargé des relations côté émission de l'acheminement des messages et l'objet réception RERLA chargé des relations côté réception de l'acheminement des messages, et, d'autre part, l'objet IACS contient trois objets inclus, fournissant trois modes d'acheminement des messages, l'objet de transmission de datagramme DTG, l'objet de transmission de question-réponse QR et l'objet de transmission de session SS.

Les SAP la3 et la4 sont remplacés par ce qui est représenté comme trois SAP double-sens la31, la32 et la33, mais correspond en fait trois paires de SAP pour l'accès aux trois objets inclus de l'objet IACS.

L'objet de transmission de datagramme DTG reçoit un message de l'objet EMRLA inclus dans l'objet RLA, en accuse réception, le transmet à l'objet RERLA inclus dans l'objet RLA, en reçoit accusé de réception, et fournit une indication de remise de message vers l'objet EMRLA. Ainsi, on voit qu'un datagramme est un message ne comportant pas de réponse.

L'objet de transmission de question-réponse QR permet un mode de transmission semblable au précédent, mais prévoit de plus la transmission en sens inverse d'un message de réponse au premier message acheminé considéré comme une question.

L'objet de transmission de session SS, à la différence des deux précédents qui ne visent qu'à acheminer un seul message, est aménagé pour la transmission dans les deux sens de plusieurs messages entre deux objets définis. Une ouverture de session est demandée par un premier message de l'objet initiateur ; elle est acceptée par l'objet destinataire. Ensuite, les messages sont acheminés sans qu'il y ait lieu de prévoir de réponse. La remise du message est simplement signalée.

On ne s'étendra pas davantage sur les modes de transmission, car on peut en imaginer un grand nombre, selon les besoins de communication.

Dans ce qui précède, enfin, on a tout juste mentionné les aspects multitraitement qui se situent d'ailleurs en dehors du domaine de l'invention.

On rappelera cependant que chaque objet et cela s'applique aussi aux objets RLA et IACS comprend dans ses données de fonctionnement, des "contextes", ensemble des données relatives au traitement d'un appel. Ainsi, l'objet peut être appelé pour accomplir une étape dans le traitement d'un appel, précédemment suspendu, dans l'attente d'un évènement qui vient de se produire, la réponse de l'abonné appelé, par exemple, ou la confirmation de l'établissement d'une connexion, ou encore la réponse qu'un autre objet ayant eu à accomplir sa propre part dans le traitement d'appel. Cet évènement lui est signalé par un message. Classiquement, à ce message est attachée une information qui, d'une façon ou d'une autre, identifie l'appel dont il s'agit, donc le "contexte" auquel l'objet doit se référer et qui décrit la situation atteinte avant la suspension du traitement dans l'objet en question. L'étape de traitement est accomplie par rapport à ce contexte qui est ainsi modifiée, avant que, à la fin de l'étape de traitement, l'objet n'abandonne le traitement d'appel considéré, devenant disponible pour le traitement d'un autre appel, en se référant à un autre contexte.

Selon une caractéristique additionnelle de l'invention, c'est à l'objet RLA fournissant le service de communication de messages qu'est confié la responsabilité des aspects multitraitement, c'est-à-dire le soin d'affecter un contexte à un traitement d'appel dans un objet sollicité pour la première fois au sujet de cet appel, et d'identifier le contexte à mettre en oeuvre chaque fois que cet objet est à nouveau sollicité pour le même appel, ce qui peut se faire à partir de l'identité du contexte de l'objet initiateur, également connu de l'objet RLA, et ainsi de suite.

Il est bien évident que les descriptions qui précèdent n'ont été fournies qu'à titre d'exemple non limitatif et que de nombreuses variantes peuvent être imaginées, sans sortir pour autant du cadre de l'invention.

## Revendications

1. Structure de logiciel pour système de traitement de données, notamment pour système de télécommunications, comprenant des objets structurels incluant chacun des données et des procédures, lesdites procédures étant des programmes utilisant les données de l'objet et tels que l'objet se présente comme un "fournisseur de service", comprenant chacun au moins un point d'accès au service auquel un message destiné à l'objet peut être adressé par un "utilisateur de service", un tel message comportant notamment une en-tête et des paramètres, l'en-tête contenant notamment une identité d'objet, chaque objet structurel étant associé à d'autres objets par des relations qui le situent structurellement par rapport à ces autres objets, **caractérisé en ce que** chaque objet (OBJ) est composé d'un ou plusieurs modules de point d'accès au service (SAP1, SAP2, SAPn) et d'un ou plusieurs modules de noyau (N1,N2,N3) et en ce que les communications entre objets ont lieu par transmission de messages entre un module de point d'accès au service d'un objet initiateur et un module de point d'accès au service d'un objet destinataire, conformément à un protocole de communication (I-OBJ1, I-OBJ2, I-OBJn), la transmission de ces messages étant accomplie par l'entremise d'un objet constituant un service de communication (RLA, IACS), recevant les messages à acheminer des objets initiateurs et les fournissant aux objets destinataires, ce service de communication contenant des données définissant les relations entre objets et s'y référant en même temps qu'à l'identité d'objet de l'en-tête d'un message, dans la détermination de l'identité de l'objet structurel destinataire auquel le message doit être remis.

2. Structure de logiciel pour système de traitement de données, notamment pour système de télécommunications, conforme à la revendication 1, caractérisée en ce qu'un objet possédant plusieurs points d'accès au service (pc1, pc2, pcn), ladite en-tête des messages qui lui sont destinés contient la désignation d'un point d'accès au service, et ledit service de communication est aménagé pour adresser ce message, en se référant à son en-tête et auxdites relations entre objets, à un point d'accès au service de l'objet structurel destinataire du message.

3. Structure de logiciel pour système de traitement de données, notamment pour système de télécommunications, conforme à la revendication 2, caractérisée en ce que ladite en-tête des messages contient en outre l'identité d'une opération demandée à l'objet destinataire du message et en ce que ledit service de communication tient compte de ladite identité d'opération demandée, dans la sélection de point d'accès au service (pc1, pc2, pcn) d'un objet structurel destinataire auquel doit être adressé un message.

4. Structure de logiciel pour système de traitement de données, notamment pour système de télécommunications, conforme à l'une quelconque des revendications 1 à 3, caractérisée en ce que lesdites relations comprennent la dépendance, l'utilisation, l'inclusion et l'homologie.

5. Structure de logiciel pour système de traitement de données, notamment pour système de télécommunications, conforme à l'une quelconque des revendications 1 à 3, caractérisée en ce que ledit protocole de communication (I-OBJ1, I-OBJ2, I-OBJn) est défini dans le module de point d'accès au service (SAP1, SAP2, SAPn) de l'objet destinataire et il est spécifié par ce dernier au module de point d'accès au service de l'objet initiateur, afin que celui-ci l'applique.

6. Structure de logiciel pour système de traitement de données, notamment pour système de télécommunications, conforme à l'une quelconque des revendications 1 à 3, caractérisée en ce ledit service de communication (RLA, IACS) a également la responsabilité des aspects multitraitement, c'est-à-dire le soin d'affecter un contexte à un traitement d'appel dans un objet sollicité pour la première fois au sujet de cet appel, et d'identifier le contexte à mettre en oeuvre chaque fois que cet objet est à nouveau sollicité pour le même appel.

## Patentansprüche

1. Programmstruktur für ein Datenverarbeitungssystem, insbesondere für ein Telekommunikationssystem, die Strukturobjekte umfasst, die jeweils Daten und Prozeduren beinhalten, wobei die Prozeduren Programme sind, die die Daten des Objekts nutzen, und so, dass das Objekt als "Dienstlieferant" auftritt, wobei jedes einen Zugangspunkt zum Dienst umfasst, an welchen eine für das Objekt bestimmte Nachricht von einem "Dienstnutzer" gesendet werden kann, wobei eine solche Nachricht insbesondere einen Kopf und Parameter aufweist, wobei der Kopf insbesondere eine Objektidentität beinhaltet, wobei jedes Strukturobjekt durch Beziehungen mit anderen Objekten verbunden ist, die es hinsichtlich dieser anderen Objekte strukturell anordnen, **dadurch gekennzeichnet**, dass jedes Objekt (OBJ) aus einem oder mehreren Modulen (SAP1, SAP2, SAPn) für den Zugangspunkt zum Dienst und einem oder mehreren Kernmodulen (N1, N2, N3) besteht und dass die Kommunikationen zwischen Objekten durch Übertragung von Nachrichten zwischen einem Modul für den Zugangspunkt zum Dienst eines einführenden Objekts und einem Modul für den Zugangspunkt zum Dienst eines Empfängerobjekts gemäß einem Kommunikationsprotokoll (I-OBJ1, I-OBJ2, I-OBJn) stattfindet, wobei die Übertragung dieser Nachrichten durch Vermittlung eines einen Kommunikationsdienst (RLA, IACS) bildenden Objekts ausgeführt wird, das die zu leitenden Nachrichten von den einführenden Objekten empfängt und sie an die Empfängerobjekte liefert, wobei dieser Kommunikationsdienst bei der Bestimmung der Identität des Empfänger-Strukturobjekts, an das die Nachricht gegeben werden soll, Daten beinhaltet, die die Beziehungen zwischen den Objekten definieren und sich gleichzeitig auf die Objektidentität des Kopfes einer Nachricht beziehen.

2. Programmstruktur für ein Datenverarbeitungssystem, insbesondere für ein Telekommunikationssystem, nach Anspruch 1, dadurch gekennzeichnet, dass wenn ein Objekt mehrere Zugangspunkte (pc1, pc2, pcn) zum Dienst besitzt, der Kopf der Nachrichten, die für es bestimmt sind, die Bezeichnung eines Zugangspunktes zum Dienst enthält und der Kommunikationsdienst zum Senden dieser Nachricht unter Bezugnahme auf ihren Kopf und die Beziehungen zwischen den Objekten zu einem Punkt des Zugangs zum Dienst des Empfänger-Strukturobjekts für die Nachricht eingerichtet ist.

3. Programmstruktur für ein Datenverarbeitungssystem, insbesondere für ein Telekommunikationssystem, nach Anspruch 2, dadurch gekennzeichnet, dass der Kopf der Nachrichten außerdem die Identität einer vom Empfängerobjekt für die Nachricht angeforderten Operation enthält und dass der Kommunikationsdienst die Identität der angeforderten Operation bei der Auswahl des Zugangspunktes (pc1, pc2, pcn) zum Dienst eines Empfänger-Strukturobjekts berücksichtigt, dem eine Nachricht gesendet werden soll.

4. Programmstruktur für ein Datenverarbeitungssystem, insbesondere für ein Telekommunikationssystem, nach einem der Ansprüche 1 bis 3, dadurch gekennzeichnet, dass die Beziehungen die Abhängigkeit, die Nutzung, die Einschließung und die Homologie umfassen.

5. Programmstruktur für ein Datenverarbeitungssystem, insbesondere für ein Telekommunikationssystem, nach einem der Ansprüche 1 bis 3, dadurch gekennzeichnet, dass das Kommunikationsprotokoll (I-OBJ1, I-OBJ2, I-OBJn) im Modul (SAP1, SAP2, SAPn) für den Zugangspunkt zum Dienst des Empfängerobjekts definiert ist und es durch dieses letztere für das Modul für den Zugangspunkt zum Dienst des einführenden Objekts spezifiziert ist, damit dieses es anwendet.

6. Programmstruktur für ein Datenverarbeitungssystem, insbesondere für ein Telekommunikationssystem, nach einem der Ansprüche 1 bis 3, dadurch gekennzeichnet, dass der Kommunikationsdienst (RLA, IACS) auch die Verantwortung für Multiprocessing-Aspekte, d.h. die Sorge hat, bei einem zum ersten Mal beanspruchten Objekt der Verarbeitung des Aufrufs einen Kontext über den Gegenstand dieses Aufrufs zuzuweisen und den Kontext zu identifizieren, der jedes Mal durchzuführen ist, wenn dieses Objekt von neuem für den gleichen Aufruf beansprucht wird.

## Claims

1. Data-processing system software structure, in particular for a telecommunication system, comprising structural objects each including data procedures, said procedures being programs using the data of the object and such that the object is presented as a "service provider", each comprising at least one service access point to which a message addressed to the object may be sent by a "service user", any such message including in particular a header and parameters, said header including in particular an object identity, each structural object being associated with other objects by relationships which relate it to said other objects structurally, in which structure each object (OBJ) is made up of one or more service access point modules (SAP1, SAP2, SAPn) and one or more kernel modules (N1, N2, N3) and communication between objects takes place by transmission of messages between a service access point module of an originator object and a service access point module of a recipient object, in accordance with a communication protocol (I-OBJ1, I-OBJ2, I-OBJn), said messages being transmitted by a communication service object (RLA, IACS) receiving the messages to be routed from the originator objects and supplying them to the recipient objects, said communication service including data defining the relationships between objects referring thereto at the same time as to the object identity of the header and of a message to determine the identity of the recipient structural object to which the message must be sent.

2. Data-processing system software structure, in particular for a telecommunication system, according to claim 1, wherein since an object has a plurality of service access points (pc1, pc2, pcn), said header of messages addressed to it contains the designation of a service access point and said communication service is adapted to address said message with reference to its header and to said relationships between objects to a service access point of the structural object receiving the message.

3. Data-processing system software structure, in particular for a telecommunication system, according to claim 2, wherein said message header further contains the identity of an operation requested of the object receiving the message and said communication service allows for said requested operation identity in selecting the service access point (pc1, pc2, pcn) of a recipient structural object to which a message is to be sent.

4. Data-processing system software structure, in particular for a telecommunication system, according to any one of claims 1 to 3, wherein said relationships include dependency, use, inclusion and homology.

5. Data-processing system software structure, in particular for a telecommunication system, according to any one of claims 1 to 3, wherein said communication protocol (I-OBJ1, I-OBJ2, I-OBJn) is defined in the service access point module (SAP1, SAP2, SAPn) of the recipient object and is notified by the latter to the service access point module of the originator object so that the latter uses it.

6. Data-processing system software structure, in particular for a telecommunication system, according to any one of claims 1 to 3, wherein said communication service (RLA, IACS) is also responsible for multiprocessing aspects, that is to say for assigning a context to a call-processing operation in an object invoked for the first time in relation to said call and identifying the context to be used each time that said object is invoked again for the same call.
